# EUROPÄISCHE PATENTSCHRIFT

(11) **EP 3 676 510 B1**
(45) Veröffentlichungstag und Bekanntmachung des Hinweises auf die Patenterteilung: **02.12.2020**
(21) Anmeldenummer: 17778164.8
(22) Anmeldetag: 15.09.2017
(51) Int. Cl.: F16F 15/02, B30B 15/00, F16F 15/023, F16F 15/027

(54) **STANZPRESSE GELAGERT AUF FEDER-DÄMPFER-ELEMENTEN**
PUNCH PRESS MOUNTED ON SPRING-DAMPER ELEMENTS
PRESSE À DÉCOUPER MONTÉE SUR ÉLÉMENTS AMORTISSEURS À RESSORT

(43) Veröffentlichungstag der Anmeldung: 08.07.2020
(73) Patentinhaber: Bruderer AG, 9320 Frasnacht (CH)
(72) Erfinder: DE SANTIS, Ugo, 9325 Roggwil (CH)
(74) Vertreter: Münch, Martin Walter
(86) Internationale Anmeldenummer: PCT/CH2017/000084
(87) Internationale Veröffentlichungsnummer: WO 2019/051619

(56) Entgegenhaltungen:
- EP-A1- 0 270 762
- DE-A1- 2 419 607
- DE-B- 1 111 040
- JP-A- H06 262 399
- US-A1- 2012 255 822

## Beschreibung

Die Erfindung betrifft eine Stanzpresse, gelagert auf Feder-Dämpfer-Elementen, die Verwendung eines Feder-Dämpfer-Elements zur Lagerung einer Stanzpresse sowie Verfahren zum Betrieb von Stanzpressen, welche auf Feder-Dämpfer-Elementen gelagert sind, gemäss den Oberbegriffen der unabhängigen Patentansprüche.

### STAND DER TECHNIK

Grosse Stanzpressen über 200 kN Nennlast sind mit Massenausgleich und Feder-Dämpfer-Elementen ausgerüstet. Sie benötigen keine speziellen Fundamente und müssen auch nicht am Boden befestigt werden. Die Maschine und die Feder-Dämpfer-Elemente bilden zusammen einen Einmassen-Schwinger mit einer relativ niedrigen Eigenfrequenz von z.B. 2.5 Hz bzw. 150 min -1.

Die Feder-Dämpfer-Elemente erfüllen dabei mehrere Funktionen. Zum einen dienen sie dazu, die Bodenbelastung aus dynamischen Massenkräften zu reduzieren, im Resonanzbereich ein "Aufschaukeln" der Maschine zu verhindern und die Maschinenbewegung beim Ein- und Auskuppeln der Presse zu reduzieren. Zum anderen dienen sie der Führung der Stanzpresse in der horizontalen Ebene.

Bei der Auslegung des Massenausgleichs der Pressen wird ein mittleres Gewicht für das Werkzeugoberteil eingerechnet, von welchem das tatsächliche Werkzeuggewicht oftmals deutlich abweicht.

Entsprechend kann es bei unterschiedlichen Stanzaufträgen infolge unterschiedlicher Unwuchtmassen und Stanzfrequenzen zu recht unterschiedlichen Betriebsbedingungen bezüglich die Schwingungsanregung des Systems kommen, was eine Auslegung der Feder-Dämpfer-Elemente für einen variablen Betrieb kaum möglich macht.

Bei einer Auslegung der Feder-Dämpfer-Elemente für einen Betrieb mit hohen Stanzfrequenzen ergibt sich typischerweise das Problem, dass im Betrieb mit niedrigen Stanzfrequenzen sehr grosse Amplituden resultieren, was den Einsatzbereich der Presse signifikant beeinträchtigen kann.

Bei einer Auslegung der Feder-Dämpfer-Elemente für einen Betrieb bei niedrigen Stanzfrequenzen nahe der Eigenfrequenz ergibt sich das Problem, dass im Betrieb mit relativ hohen Stanzfrequenzen typischerweise unnötig hohen Bodenbelastungen auftreten. Generell ergibt sich bei dieser Auslegung auch das Problem, dass die Stosskräfte aus dem Stanzschlag über die Feder-Dämpfer-Elemente auf den Boden übertragen werden, was dann zu einer kurzzeitigen sehr hohen Bodenbelastung führt.

Aus EP 0 270 762 A1 sind gattungsgemässe Feder-Dämpfer-Elemente bekannt, bei denen dem letztgenannten Problem durch ein Druckentlastungsventil im Dämpferkolben begegnet wird, welcher den Stützdruck des Feder-Dämpfer-Elements und damit die maximale Bodenbelastung begrenzt.

### DARSTELLUNG DER ERFINDUNG

Es stellt sich die Aufgabe, technische Lösungen zur Verfügung zu stellen, welche die zuvor genannten Nachteile des Standes der Technik nicht aufweisen oder diese zumindest teilweise vermeiden.

Diese Aufgabe wird durch die Gegenstände der unabhängigen Patentansprüche gelöst.

Gemäss diesen betrifft ein erster Aspekt der Erfindung eine Stanzpresse, gelagert auf Feder-Dämpfer-Elemente.

Das Feder-Dämpfer-Element weist eine hydraulische Dämpfereinheit auf. Diese umfasst einen ersten Fluidraum und einen zweiten Fluidraum, wobei im bestimmungsgemässen Betrieb beim Einfedern des Feder-Dämpfer-Elements ein Hydraulikfluid von dem ersten Fluidraum über eine Drosselstelle in den zweiten Fluidraum verdrängt wird und so eine Dämpfungswirkung erzielt wird. Zwischen dem ersten Fluidraum und dem zweiten Fluidraum der Dämpfereinheit ist ein Überlastventil angeordnet, welches bei Erreichen eines bestimmten Fluiddruckes im ersten Fluidraum oder bei Erreichen einer bestimmten Druckdifferenz zwischen dem ersten Fluidraum und dem zweiten Fluidraum öffnet und einen Bypass freigibt, über den sodann unter Umgehung der Drosselstelle Hydraulikfluid vom ersten Fluidraum in den zweiten Fluidraum strömt und dadurch einen weiteren Druckanstieg im ersten Fluidraum im Wesentlichen verhindert. Der Fluiddruck bzw. die Druckdifferenz, bei welchem bzw. bei welcher das Überlastventil öffnet, kann bei bestimmungsgemäss eingebautem Feder-Dämpfer-Element in stufen oder stufenlos eingestellt werden, und zwar bevorzugterweise von Hand, insbesondere werkzeuglos, und/oder automatisiert über eine Steuerung mit fremdkraftbetätigten Einstellmitteln, wie z.B. Stellantrieben oder Pneumatikzylindern.

Mit den erfindungsgemässen Feder-Dämpfer-Elementen wird es möglich, eine Lagerung für eine Stanzpresse zu schaffen, deren Dämpfungscharakteristik ohne grossen Aufwand verändert werden kann, so dass ein in weiten Bereichen variabler Betrieb der Presse bei jeweils minimaler Bodenbelastung möglich wird.

In einer bevorzugten Ausführungsform des Feder-Dämpfer-Elements ist dessen hydraulische Dämpfereinheit derartig ausgebildet, dass im bestimmungsgemässen Betrieb beim Ausfedern des Feder-Dämpfer-Elements Hydraulikfluid über einen gegenüber dem Drosselquerschnitt erweiterten Strömungsquerschnitt von dem zweiten Fluidraum zurück in den ersten Fluidraum fliesst. Die Dämpfereinheit wirkt also bei dieser Ausführungsform im Wesentlichen in Einfederungsrichtung, und weist in Ausfederungsrichtung keine oder eine deutlich geringere Dämpfungswirkung als in Einfederungsrichtung auf. Hierdurch wird es möglich, auf eine Befestigung der Feder-Dämpfer-Elemente am Boden zu verzichten.

Bevorzugterweise ist die hydraulische Dämpfereinheit des Feder-Dämpfer-Elements derartig ausgestaltet, dass der Fluiddruck bzw. die Druckdifferenz, bei welchem bzw. bei welcher das Überlastventil öffnet, während dem bestimmungsgemässen Betrieb einstellbar ist. Hierdurch wird es möglich, während dem Betrieb die für den jeweiligen Betriebszustand optimale Dämpfung einzustellen, insbesondere mittels einer Steuerung, welche Parameter der Schwingbewegung, wie z.B. Amplituden und Beschleunigungen, ermittelt und die Dämpfung der Feder-Dämpfer-Elemente verändert, bis eine gewünschte Parameterkonstellation vorliegt.

In einer weiteren bevorzugten Ausführungsform des Feder-Dämpfer-Elements ist dessen hydraulische Dämpfereinheit derartig ausgestaltet, dass der Fluiddruck bzw. die Druckdifferenz, bei welchem bzw. bei welcher das Überlastventil öffnet, praktisch auf Null eingestellt werden kann, so dass beim Einfedern des Feder-Dämpfer-Elements das Überlastventil öffnet, ohne dass es zu einem nennenswerten Druckaufbau im ersten Fluidraum kommt, wodurch die hydraulische Dämpfereinheit zumindest in Einfederungsrichtung praktisch unwirksam ist.

Alternativ ist die hydraulische Dämpfereinheit derartig ausgestaltet, dass das Überlastventil in einen geöffneten Zustand gebracht werden kann, so dass das Hydraulikfluid sowohl beim Einfedern als auch beim Ausfedern des Feder-Dämpfer-Elements praktisch ungehindert zwischen dem ersten und dem zweiten Fluidraum hin und her strömen kann, wodurch die hydraulische Dämpfereinheit sowohl in Einfederungsrichtung als auch in Ausfederungsrichtung praktisch unwirksam ist.

In noch einer weiteren bevorzugten Ausführungsform des Feder-Dämpfer-Elements weist dessen hydraulische Dämpfereinheit ein schaltbares Bypassventil zwischen dem ersten Fluidraum und dem zweiten Fluidraum auf, welches im geöffneten Zustand einen Bypass freigibt, über den unter Umgehung der Drosselstelle beim Einfedern des Feder-Dämpfer-Elements Hydraulikfluid vom ersten Fluidraum in den zweiten Fluidraum strömt und beim Ausfedern des Feder-Dämpfer-Elements Hydraulikfluid vom zweiten Fluidraum in den ersten Fluidraum strömt, so dass die hydraulische Dämpfereinheit sowohl in Einfederungsrichtung als auch in Ausfederungsrichtung praktisch unwirksam ist.

Mit den zuvor genannten bevorzugten Ausführungsformen des Feder-Dämpfer-Elements kann die Dämpfereinheit für einen Betrieb mit relativ hohen Stanzfrequenzen praktisch unwirksam gemacht werden, so dass die Bodenbelastungen minimiert werden.

Mit Vorteil weist das Feder-Dämpfer-Element zur Einstellung des Fluiddrucks bzw. der Druckdifferenz, bei welchem bzw. bei welcher das Überlastventil öffnet, einen Pneumatikzylinder auf, welcher im bestimmungsgemässen Betrieb mit einem bestimmten Luftdruck beaufschlagt wird und dadurch eine bestimmte Ventilschliesskraft erzeugt. Hierdurch lässt sich auf einfache Weise eine feinfühlige und einfach zu automatisierende Einstellung realisieren.

Alternativ oder ergänzend ist es bevorzugt, dass das Feder-Dämpfer-Element zur Einstellung des Fluiddrucks bzw. der Druckdifferenz, bei welchem bzw. bei welcher das Überlastventil öffnet, eine Gewindespindel aufweist, welche auf eine oder mehrere Ventilfedern wirkt und dadurch eine bestimmte Ventilschliesskraft erzeugt. Hierdurch lässt sich auf besonders einfache und zuverlässige Weise eine manuelle Einstellung realisieren.

Ein zweiter Aspekt der Erfindung betrifft die Verwendung eines Feder-Dämpfer-Elements gemäss dem des ersten Aspekts der Erfindung zur Lagerung einer Stanzpresse. Bei derartigen Verwendungen treten die Vorteile der Erfindung besonders deutlich zutage.

Ein dritter Aspekt der Erfindung betrifft ein Verfahren zum Betrieb einer Stanzpresse gemäss dem ersten Aspekt der Erfindung. Dabei wird die Stanzpresse bei unterschiedlichen bestimmungsgemässen Betriebseinsätzen jeweils mit unterschiedlichen Einstellung des Fluiddrucks bzw. der Druckdifferenz, bei welchem bzw. bei welcher die Überlastventile der Feder-Dämpfer-Elemente öffnen, betrieben.

Ein vierter Aspekt der Erfindung betrifft ein weiteres Verfahren zum Betrieb einer Stanzpresse gemäss dem ersten Aspekt der Erfindung. Dabei wird die Einstellung des Fluiddrucks bzw. der Druckdifferenz, bei welchem bzw. bei welcher die Überlastventile der Feder-Dämpfer-Elemente öffnen, während dem bestimmungsgemässen Betriebseinsatz der Stanzpresse verändert, zur Veränderung der Amplitude, mit welcher die Stanzpresse in den Feder-Dämpfer-Elementen schwingt.

Mit den erfindungsgemässen Verfahren gemäss dem dritten und dem vierten Aspekt der Erfindung, welche bevorzugterweise kombiniert werden, wird es möglich, die Dämpfungscharakteristik der Lagerung der Stanzpresse an den jeweiligen Betriebseinsatz anzupassen, so dass ein in weiten Bereichen variabler Betrieb der Presse bei jeweils minimaler Bodenbelastung möglich wird.

Dabei ist es weiter bevorzugt, dass die Einstellung des Fluiddrucks bzw. der Druckdifferenz, bei welchem bzw. bei welcher die Überlastventile der Feder-Dämpfer-Elemente öffnen, derartig verändert wird, dass die Stanzpresse mit einer bestimmten Amplitude in den Feder-Dämpfer-Elementen schwingt, bevorzugterweise mit einer maximal zulässigen Amplitude. Hierdurch lassen sich insbesondere bei einem Betrieb mit niedrigen Stanzfrequenzen nahe der Eigenfrequenz die Bodenbelastungen so gering wie möglich halten.

Bevorzugterweise wird dabei die Amplitude gemessen, z.B. mittels eines oder mehrerer Distanzmesssensoren, und die Einstellung des Fluiddrucks bzw. der Druckdifferenz, bei welchem bzw. bei welcher die Überlastventile der Feder-Dämpfer-Elemente öffnen, über eine Maschinensteuerung automatisch derartig geregelt, dass die Stanzpresse mit einer gewünschten Amplitude in den Feder-Dämpfer-Elementen schwingt.

Wird dabei bei jedem Feder-Dämpfer-Element separat die Amplitude gemessen und die Einstellung des Fluiddrucks bzw. der Druckdifferenz, bei welchem bzw. bei welcher sein Überlastventil öffnet, geregelt, so kann das Schwingverhalten der Stanzpresse weiter optimiert werden, z.B. Nickbewegungen infolge ungleichmässiger Lastverteilung kompensiert werden.

Die Einstellung des Fluiddrucks bzw. der Druckdifferenz, bei welchem bzw. bei welcher die Überlastventile der Feder-Dämpfer-Elemente öffnen, wird bevorzugterweise mit Hilfe von Pneumatikzylindern bewirkt, welche mit einem bestimmten Luftdruck beaufschlagt werden und eine entsprechende Ventilschliesskraft erzeugen. Hierdurch lässt sich auf einfache Weise eine feinfühlige und einfach zu automatisierende Einstellung realisieren.

Alternativ oder ergänzend ist es bevorzugt, die Einstellung des Fluiddrucks bzw. der Druckdifferenz, bei welchem bzw. bei welcher die Überlastventile der Feder-Dämpfer-Elemente öffnen, mit Hilfe von Gewindespindeln zu bewirken, welche auf eine oder mehrere Ventilfedern wirken und dadurch eine Ventilschliesskraft erzeugen. Hierdurch lässt sich auf besonders einfache und zuverlässige Weise eine manuelle Einstellung realisieren.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Stanzpresse, welche auf erfindungsgemässen Feder-Dämpfer-Elementen gelagert ist;
Fig. 2 einen Vertikalschnitt durch eines der erfindungsgemässen Feder-Dämpfer-Elemente aus Fig. 1;
Fig. 3 einen Vertikalschnitt durch eine erste Variante des Feder-Dämpfer-Elements aus Fig. 2; und
Fig. 4 einen Vertikalschnitt durch eine zweite Variante des Feder-Dämpfer-Elements aus Fig. 2.

### WEGE ZUR AUSFÜHRUNG DER ERFINDUNG

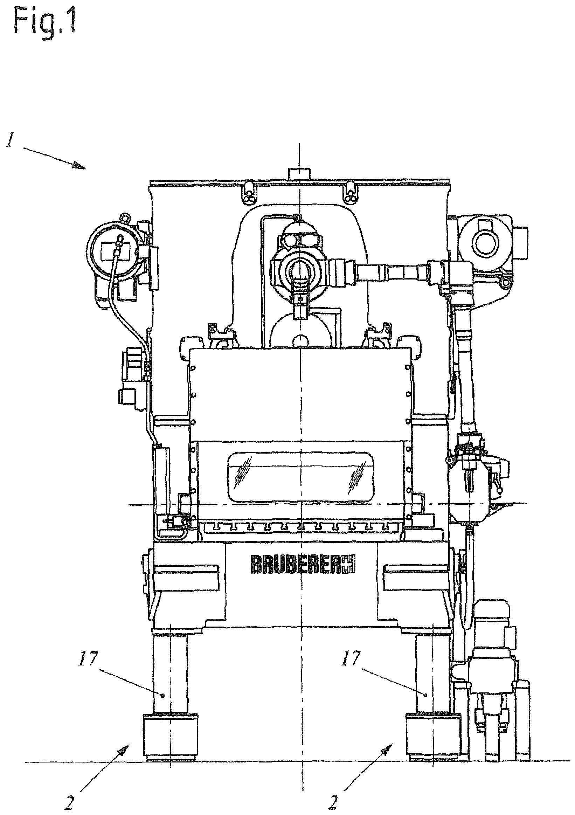

Fig. 1 zeigt eine Stanzpresse 1, welche auf vier identischen erfindungsgemässen Feder-Dämpfer-Elementen 2 auf einem Fabrikboden 21 gelagert ist.

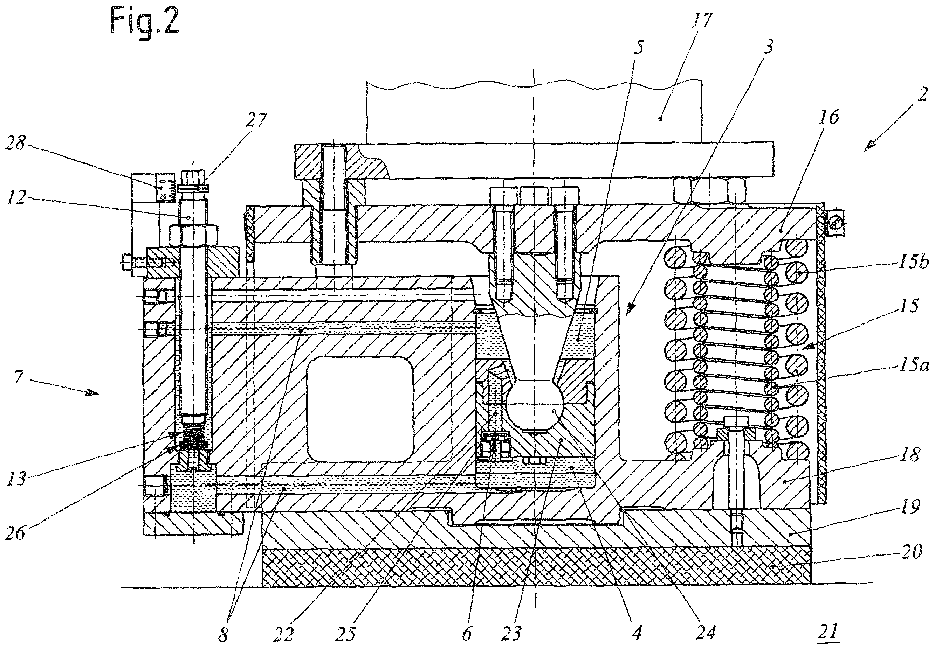

Wie in Zusammenschau mit Fig. 2 ersichtlich ist, welche einen Vertikalschnitt durch eines der Feder-Dämpfer-Elemente 2 zeigt, weist das Feder-Dämpfer-Element 2 eine zentrale hydraulische Dämpfereinheit 3 auf, welche von sechs mit gleichmässiger Teilung auf einem konzentrischen Kreis um diese angeordneten Schraubenfeder-Paketen 15 umgeben ist, über welche sich eine Tragplatte 16, welche eine Standsäule 17 der Stanzpresse 1 trägt, auf einem Tragkörper 18 abstützt, welcher die hydraulische Dämpfereinheit 3 beinhaltet und sich über eine Bodenplatte 19 und eine darunter angeordnete Dämpfungsmatte 20 auf dem Boden 21 abstützt. Jedes der Schraubenfeder-Pakete 15 umfasst eine kleinere Schraubenfeder 15a und eine grössere Schraubenfeder 15b, wobei die kleinere Schraubenfeder 15a konzentrisch innerhalb der grösseren Schraubenfeder 15b angeordnet ist.

Die hydraulische Dämpfereinheit 3 weist einen ersten Fluidraum 4 und einen zweiten Fluidraum 5 auf, welche mit einem Hydraulikfluid gefüllt sind und durch einen Dämpferkolben 23 voneinander getrennt sind, der über einen Kugelzapfen 24 mit der Tragplatte 16 verbunden ist.

Im Dämpferkolben 23 ist ein Verbindungskanal 22 angeordnet, welcher sich zwischen dem ersten Fluidraum 4 und dem zweiten Fluidraum 5 erstreckt und in welchem eine Drosselstelle 6 angeordnet ist. Die Drosselstelle 6 wird von einer Art Rückschlagventil gebildet, dessen Ventilschliesskörper von einem Plättchen 25 mit einer Drosselbohrung gebildet ist. Bei Druckbeaufschlagung dieses Rückschlagventils auf seiner dem ersten Fluidraum 4 zugewandten Seite wird das Plättchen 25 gegen einen Ventilsitz gedrückt, so dass der erste Fluidraum 4 und der zweite Fluidraum 5 lediglich über die Drosselbohrung im Plättchen 25 miteinander verbunden sind. Bei Druckbeaufschlagung dieses Rückschlagventils auf seiner dem zweiten Fluidraum 5 zugewandten Seite wird das Plättchen 25 vom Ventilsitz weggedrückt und gibt einen gegenüber seiner Drosselbohrung deutlich erweiterten Strömungsquerschnitt frei, über welchen der erste Fluidraum 4 und der zweite Fluidraum 5 dann miteinander verbunden sind.

Entsprechend wird beim Einfedern des Feder-Dämpfer-Elements 2, bei welchem es zu einer Verschiebung des Dämpferkolbens 23 in den ersten Fluidraum 4 und in der Folge zu einem Druckanstieg im ersten Fluidraum 4 kommt, Hydraulikfluid lediglich über die Drosselbohrung in dem Plättchen 25 von dem ersten Fluidraum 4 in den zweiten Fluidraum 5 verdrängt, mit dem Effekt, dass beim Einfedern eine Dämpfungswirkung erzielt wird.

Beim Ausfedern hingegen steht entsprechend ein deutlich grössere Strömungsquerschnitt für das Zurückfliessen von Hydraulikflüssigkeit von dem zweiten Fluidraum 5 in den ersten Fluidraum 4 zur Verfügung, und es ergibt sich eine deutlich geringere oder gar keine Dämpfungswirkung.

Wie weiter zu erkennen ist, umfasst die hydraulische Dämpfungseinheit 3 angeordnet gut zugänglich aussen am Feder-Dämpfer-Element 2 ein Überlastventil 7, welches einer Bypass-Leitung 8 zwischen dem ersten Fluidraum 4 und dem zweiten Fluidraum 5 zugeordnet ist und welches bei Erreichen eines bestimmten Fluiddruckes im ersten Fluidraum 4 oder bei Erreichen einer bestimmten Druckdifferenz zwischen dem ersten Fluidraum 4 und dem zweiten Fluidraum 5 öffnet, so dass dann Hydraulikfluid unter Umgehung der Drosselstelle 6 vom ersten Fluidraum 4 über die Bypass-Leitung 8 in den zweiten Fluidraum 5 strömt. Hierdurch wird ein weiterer Druckanstieg im ersten Fluidraum 4 verhindert.

Dieses Überlastventil 7 besteht im Wesentlichen aus einer Ventilplatte 26, die von einer Feder 13 gegen einen Ventilsitz gepresst wird. Die Federvorspannung lässt sich mit einer Gewindespindel 12 einstellen bzw. auch vollständig aufheben. Oben an der Gewindespindel 12 ist ein Markierungsrand 27 direkt gegenüberliegend einer Skala 28 angeordnet, mittels welchen die eingestellte Federvorspannung abgelesen werden kann.

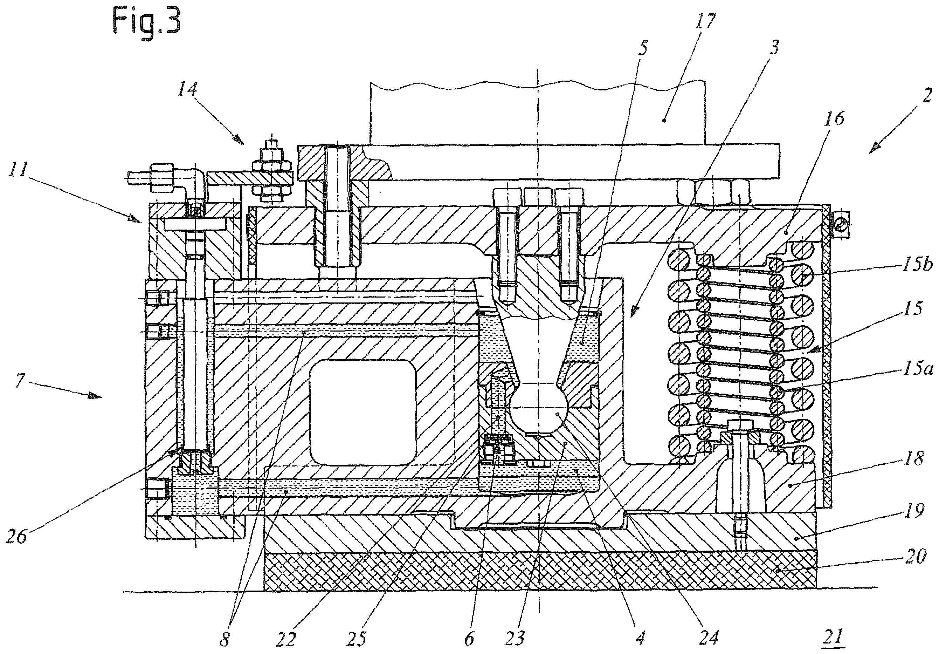

Fig. 3 zeigt einen Vertikalschnitt durch eine erste Variante des Feder-Dämpfer-Elements, welche sich von dem in Fig. 2 gezeigten Feder-Dämpfer-Element lediglich dadurch unterscheidet, dass die Ventilplatte 26 des Überlastventils 7 nicht über eine mittels einer Gewindespindel vorgespannten Feder belastet wird, sondern mittels eines Pneumatikzylinders 11, welcher entsprechend dem gewünschtem Öffnungsdruck mit einem bestimmten Luftdruck beaufschlagt wird. Dieses Feder-Dämpfer-Element weist zudem einen Distanzmesssensor 14 auf, mittels welchem die Schwingbewegung der Stanzpresse von einer Maschinensteuerung (nicht gezeigt) erfasst wird und die Druckluftbeaufschlagung des Pneumatikzylinders 11 automatisch derartig geregelt wird, dass die Stanzpresse 1 mit einer gewünschten Amplitude in den Feder-Dämpfer-Elementen 2 schwingt.

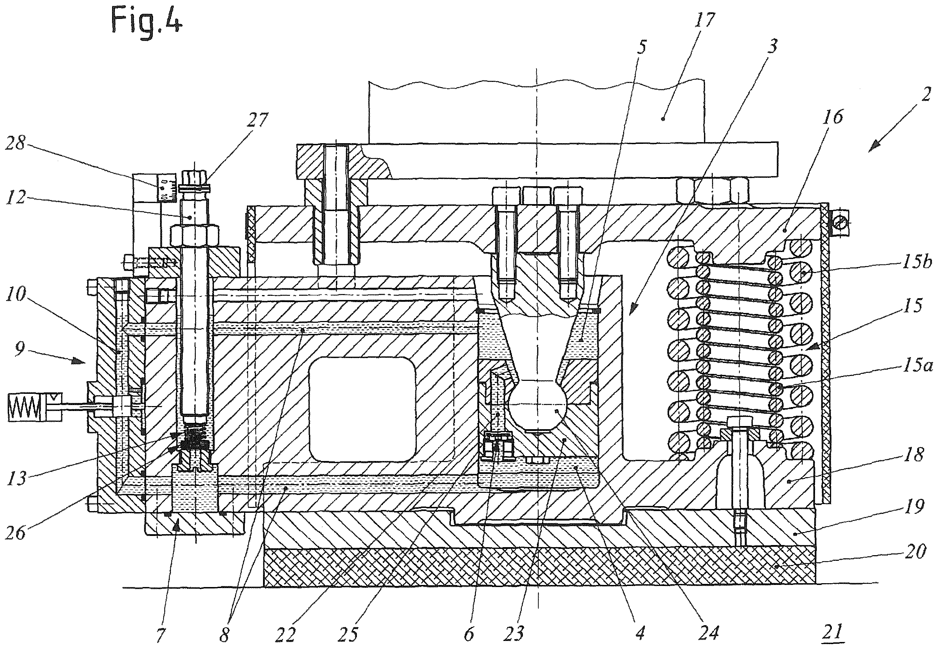

Fig. 4 zeigt einen Vertikalschnitt durch eine erste Variante des Feder-Dämpfer-Elements, welche sich von dem in Fig. 2 gezeigten Feder-Dämpfer-Element lediglich dadurch unterscheidet, dass die hydraulische Dämpfereinheit 3 zusätzlich ein schaltbares Bypassventil 9 angeordnet zwischen dem ersten Fluidraum 4 und dem zweiten Fluidraum 5 aufweist, welches im geöffneten Zustand einen Bypass 10 freigibt, über den unter Umgehung der Drosselstelle 6 und des Überlastventils 7 beim Einfedern des Feder-Dämpfer-Elements 2 Hydraulikfluid vom ersten Fluidraum 4 in den zweiten Fluidraum 5 strömt und beim Ausfedern des Feder-Dämpfer-Elements 2 Hydraulikfluid vom zweiten Fluidraum 5 in den ersten Fluidraum 4 zurückströmt, derart, dass in beiden Richtungen praktisch keine Dämpfungswirkung vorliegt.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Patentansprüche ausgeführt werden kann.

## Patentansprüche

1. Stanzpresse (1) gelagert auf Feder-Dämpfer-Elementen (2), wobei die Feder-Dämpfer-Elemente (2) jeweils eine hydraulische Dämpfereinheit (3) mit einem ersten Fluidraum (4) und einem zweiten Fluidraum (5) aufweisen, wobei im bestimmungsgemässen Betrieb beim Einfedern des Feder-Dämpfer-Elements (2) ein Hydraulikfluid von dem ersten Fluidraum (4) über eine Drosselstelle (6) in den zweiten Fluidraum (5) verdrängt wird, und jeweils ein Überlastventil (7) angeordnet zwischen dem ersten Fluidraum (4) und dem zweiten Fluidraum (5) aufweisen, welches bei Erreichen eines bestimmten Fluiddruckes im ersten Fluidraum (4) oder bei Erreichen einer bestimmten Druckdifferenz zwischen dem ersten Fluidraum (4) und dem zweiten Fluidraum (5) öffnet und einen Bypass (8) freigibt, über den sodann unter Umgehung der Drosselstelle (6) Hydraulikfluid vom ersten Fluidraum (4) in den zweiten Fluidraum (5) strömt, **dadurch gekennzeichnet, dass** die Feder-Dämpfer-Elemente (2) jeweils derartig ausgestaltet sind, dass der Fluiddruck bzw. die Druckdifferenz, bei welchem bzw. bei welcher das Überlastventil (7) öffnet, bei bestimmungsgemäss eingebautem Feder-Dämpfer-Element (2) einstellbar ist.

2. Stanzpresse (1) nach Anspruch 1, wobei die hydraulische Dämpfereinheit (3) der Feder-Dämpfer-Elemente (2) derartig ausgebildet ist, dass im bestimmungsgemässen Betrieb beim Ausfedern des Feder-Dämpfer-Elements (2) Hydraulikfluid über einen gegenüber dem Querschnitt der Drosselstelle (6) erweiterten Strömungsquerschnitt von dem zweiten Fluidraum (5) zurück in den ersten Fluidraum (4) fliesst.

3. Stanzpresse (1) nach einem der vorangehenden Ansprüche, wobei der Fluiddruck bzw. die Druckdifferenz, bei welchem bzw. bei welcher das Überlastventil (7) der Feder-Dämpfer-Elemente (2) öffnet, stufenlos oder in Stufen einstellbar ist, insbesondere werkzeuglos.

4. Stanzpresse (1) nach einem der vorangehenden Ansprüche, wobei der Fluiddruck bzw. die Druckdifferenz, bei welchem bzw. bei welcher das Überlastventil (7) der Feder-Dämpfer-Elemente (2) öffnet, von Hand einstellbar ist und/oder automatisiert über eine Steuerung einstellbar ist.

5. Stanzpresse (1) nach einem der vorangehenden Ansprüche, wobei der Fluiddruck bzw. die Druckdifferenz, bei welchem bzw. bei welcher das Überlastventil (7) der Feder-Dämpfer-Elemente (2) öffnet, während dem bestimmungsgemässen Betrieb einstellbar ist.

6. Stanzpresse (1) nach einem der vorangehenden Ansprüche, wobei der Fluiddruck bzw. die Druckdifferenz, bei welchem bzw. bei welcher das Überlastventil (7) der Feder-Dämpfer-Elemente (2) öffnet, im Wesentlichen auf Null einstellbar ist oder das Überlastventil (7) in einen geöffneten Zustand gebracht werden kann.

7. Stanzpresse (1) nach einem der vorangehenden Ansprüche, wobei die hydraulische Dämpfereinheit (3) der Feder-Dämpfer-Elemente (2) ein schaltbares Bypassventil (9) angeordnet zwischen dem ersten Fluidraum (4) und dem zweiten Fluidraum (5) aufweist, welches im geöffneten Zustand einen Bypass (10) freigibt, über den unter Umgehung der Drosselstelle (6) beim Einfedern des Feder-Dämpfer-Elements (2) Hydraulikfluid vom ersten Fluidraum (4) in den zweiten Fluidraum (5) strömt und beim Ausfedern des Feder-Dämpfer-Elements (2) Hydraulikfluid vom zweiten Fluidraum (5) in den ersten Fluidraum (4) strömt.

8. Stanzpresse (1) nach einem der vorangehenden Ansprüche, wobei die Feder-Dämpfer-Elemente (2) zur Einstellung des Fluiddrucks bzw. der Druckdifferenz, bei welchem bzw. bei welcher das Überlastventil (7) öffnet, einen Pneumatikzylinder (11) aufweisen, welcher im bestimmungsgemässen Betrieb mit einem bestimmten Luftdruck beaufschlagt wird.

9. Stanzpresse (1) nach einem der vorangehenden Ansprüche, wobei die Feder-Dämpfer-Elemente (2) zur Einstellung des Fluiddrucks bzw. der Druckdifferenz, bei welchem bzw. bei welcher das Überlastventil (7) öffnet, eine Gewindespindel (12) aufweisen, welche auf eine oder mehrere Ventilfedern (13) wirkt.

10. Verfahren zum Betrieb einer Stanzpresse (1) nach einem der Ansprüche 1 bis 9, wobei die Presse (1) bei unterschiedlichen bestimmungsgemässen Betriebseinsätzen jeweils mit unterschiedlichen Einstellung des Fluiddrucks bzw. der Druckdifferenz, bei welchem bzw. bei welcher die Überlastventile (7) der Feder-Dämpfer-Elemente (2) öffnen, betrieben wird.

11. Verfahren zum Betrieb einer Stanzpresse (1) nach einem der Ansprüche 1 bis 9, insbesondere nach Anspruch 10, wobei die Einstellung des Fluiddrucks bzw. der Druckdifferenz, bei welchem bzw. bei welcher die Überlastventile (7) der Feder-Dämpfer-Elemente (2) öffnen, während dem bestimmungsgemässen Betriebseinsatz der Stanzpresse (1) verändert wird, zur Veränderung der Amplitude, mit welcher die Stanzpresse (1) in den Feder-Dämpfer-Elementen (2) schwingt.

12. Verfahren nach Anspruch 11, wobei die Einstellung des Fluiddrucks bzw. der Druckdifferenz, bei welchem bzw. bei welcher die Überlastventile (7) der Feder-Dämpfer-Elemente (2) öffnen, derartig verändert wird, dass die Stanzpresse (1) mit einer bestimmten Amplitude in den Feder-Dämpfer-Elementen (2) schwingt, insbesondere mit einer maximal zulässigen Amplitude.

13. Verfahren nach Anspruch 12, wobei die Amplitude gemessen wird, insbesondere mittels eines oder mehrerer Distanzmesssensoren (14), und die Einstellung des Fluiddrucks bzw. der Druckdifferenz, bei welchem bzw. bei welcher die Überlastventile (7) der Feder-Dämpfer-Elemente (2) öffnen, über eine Maschinensteuerung automatisch derartig geregelt wird, dass die Stanzpresse (1) mit einer gewünschten Amplitude in den Feder-Dämpfer-Elementen (2) schwingt.

14. Verfahren nach Anspruch 13, wobei bei jedem Feder-Dämpfer-Element (2) separat die Amplitude gemessen und die Einstellung des Fluiddrucks bzw. der Druckdifferenz, bei welchem bzw. bei welcher sein Überlastventil (7) öffnet, geregelt wird.

15. Verfahren nach einem der Ansprüche 10 bis 14, wobei die Einstellung des Fluiddrucks bzw. der Druckdifferenz, bei welchem bzw. bei welcher die Überlastventile (7) der Feder-Dämpfer-Elemente (2) öffnen, mit Hilfe von Pneumatikzylindern (11) bewirkt wird, welche mit einem bestimmten Luftdruck beaufschlagt werden.

16. Verfahren nach einem der Ansprüche 10 bis 14, wobei die Einstellung des Fluiddrucks bzw. der Druckdifferenz, bei welchem bzw. bei welcher die Überlastventile (7) der Feder-Dämpfer-Elemente (2) öffnen, mit Hilfe von Gewindespindeln (12) bewirkt wird, welche auf eine oder mehrere Ventilfedern (13) wirken.

17. Verwendung eines Feder-Dämpfer-Elements (2) zur Lagerung einer Stanzpresse (1), welches eine hydraulischen Dämpfereinheit (3) mit einem ersten Fluidraum (4) und einem zweiten Fluidraum (5) aufweist, wobei im bestimmungsgemässen Betrieb beim Einfedern des Feder-Dämpfer-Elements (2) ein Hydraulikfluid von dem ersten Fluidraum (4) über eine Drosselstelle (6) in den zweiten Fluidraum (5) verdrängt wird, und welches ein Überlastventil (7) angeordnet zwischen dem ersten Fluidraum (4) und dem zweiten Fluidraum (5) aufweist, welches bei Erreichen eines bestimmten Fluiddruckes im ersten Fluidraum (4) oder bei Erreichen einer bestimmten Druckdifferenz zwischen dem ersten Fluidraum (4) und dem zweiten Fluidraum (5) öffnet und einen Bypass (8) freigibt, über den sodann unter Umgehung der Drosselstelle (6) Hydraulikfluid vom ersten Fluidraum (4) in den zweiten Fluidraum (5) strömt, wobei das Feder-Dämpfer-Element (2) derartig ausgestaltet ist, dass der Fluiddruck bzw. die Druckdifferenz, bei welchem bzw. bei welcher das Überlastventil (7) öffnet, bei bestimmungsgemäss eingebautem Feder-Dämpfer-Element (2) einstellbar ist.

18. Verwendung eines Feder-Dämpfer-Elements (2) nach Anspruch 17, wobei die hydraulische Dämpfereinheit (3) des Feder-Dämpfer-Elements (2) derartig ausgebildet ist, dass im bestimmungsgemässen Betrieb beim Ausfedern des Feder-Dämpfer-Elements (2) Hydraulikfluid über einen gegenüber dem Querschnitt der Drosselstelle (6) erweiterten Strömungsquerschnitt von dem zweiten Fluidraum (5) zurück in den ersten Fluidraum (4) fliesst.

19. Verwendung eines Feder-Dämpfer-Elements (2) nach einem der Ansprüche 17 bis 18, wobei das Feder-Dämpfer-Element (2) derartig ausgebildet ist, dass der Fluiddruck bzw. die Druckdifferenz, bei welchem bzw. bei welcher das Überlastventil (7) öffnet, stufenlos oder in Stufen einstellbar ist, insbesondere werkzeuglos.

20. Verwendung eines Feder-Dämpfer-Elements (2) nach einem der Ansprüche 17 bis 19, wobei das Feder-Dämpfer-Element (2) derartig ausgebildet ist, dass der Fluiddruck bzw. die Druckdifferenz, bei welchem bzw. bei welcher das Überlastventil (7) öffnet, von Hand einstellbar ist und/oder automatisiert über eine Steuerung einstellbar ist.

21. Verwendung eines Feder-Dämpfer-Elements (2) nach einem der Ansprüche 17 bis 20, wobei das Feder-Dämpfer-Element (2) derartig ausgebildet ist, dass der Fluiddruck bzw. die Druckdifferenz, bei welchem bzw. bei welcher das Überlastventil (7) öffnet, während dem bestimmungsgemässen Betrieb einstellbar ist.

22. Verwendung eines Feder-Dämpfer-Elements (2) nach einem der Ansprüche 17 bis 21, wobei das Feder-Dämpfer-Element (2) derartig ausgebildet ist, dass der Fluiddruck bzw. die Druckdifferenz, bei welchem bzw. bei welcher das Überlastventil (7) öffnet, im Wesentlichen auf Null einstellbar ist oder das Überlastventil (7) in einen geöffneten Zustand gebracht werden kann.

23. Verwendung eines Feder-Dämpfer-Elements (2) nach einem der Ansprüche 17 bis 22, wobei die hydraulische Dämpfereinheit (3) des Feder-Dämpfer-Elements (2) ein schaltbares Bypassventil (9) angeordnet zwischen dem ersten Fluidraum (4) und dem zweiten Fluidraum (5) aufweist, welches im geöffneten Zustand einen Bypass (10) freigibt, über den unter Umgehung der Drosselstelle (6) beim Einfedern des Feder-Dämpfer-Elements (2) Hydraulikfluid vom ersten Fluidraum (4) in den zweiten Fluidraum (5) strömt und beim Ausfedern des Feder-Dämpfer-Elements (2) Hydraulikfluid vom zweiten Fluidraum (5) in den ersten Fluidraum (4) strömt.

24. Verwendung eines Feder-Dämpfer-Elements (2) nach einem der Ansprüche 17 bis 23, wobei das Feder-Dämpfer-Element (2) zur Einstellung des Fluiddrucks bzw. der Druckdifferenz, bei welchem bzw. bei welcher das Überlastventil (7) öffnet, einen Pneumatikzylinder (11) aufweist, welcher im bestimmungsgemässen Betrieb mit einem bestimmten Luftdruck beaufschlagt wird.

25. Verwendung eines Feder-Dämpfer-Elements (2) nach einem der Ansprüche 17 bis 23, wobei das Feder-Dämpfer-Element (2) zur Einstellung des Fluiddrucks bzw. der Druckdifferenz, bei welchem bzw. bei welcher das Überlastventil (7) öffnet, eine Gewindespindel (12) aufweist, welche auf eine oder mehrere Ventilfedern (13) wirkt.

## Claims

1. Punch press (1) mounted on spring-damper elements (2), wherein the spring-damper elements (2) each have a hydraulic damper unit (3) with a first fluid chamber (4) and a second fluid chamber (5), wherein, in the intended operation, when the spring-damper element (2) is moved downward under spring compression, a hydraulic fluid is displaced from the first fluid chamber (4) via a throttle point (6) into the second fluid chamber (5), and each have an overload valve (7) arranged between the first fluid chamber (4) and the second fluid chamber (5), which opens when a certain fluid pressure is reached in the first fluid chamber (4) or when a certain pressure difference is reached between the first fluid chamber (4) and the second fluid chamber (5), and enables a bypass (8) via which hydraulic fluid then flows from the first fluid chamber (4) into the second fluid chamber (5), bypassing the throttle point (6), **characterized in that** the spring-damper elements (2) are each adapted in such a way that the fluid pressure or the pressure difference at which the overload valve (7) opens can be adjusted when the spring-damper element (2) is installed as specified.

2. Punch press (1) according to claim 1, wherein the hydraulic damper unit (3) of the spring-damper elements (2) is adapted in such a way that during operation as intended, when the spring-damper element (2) moved upward under spring relief, hydraulic fluid flows from the second fluid chamber (5) back into the first fluid chamber (4) via a flow cross-section which is wider than the cross-section of the throttle point (6).

3. Punch press (1) according to one of the preceding claims, wherein the fluid pressure or pressure difference at which the overload valve (7) of the spring-damper elements (2) opens is adjusted continuously or in steps, in particular without tools.

4. Punch press (1) according to one of the preceding claims, wherein the fluid pressure or pressure difference at which the overload valve (7) of the spring-damper elements (2) opens can be adjusted manually and/or automatically via a control.

5. Punch press (1) according to one of the preceding claims, wherein the fluid pressure or the pressure difference at which the overload valve (7) of the spring-damper elements (2) opens is adjustable during operation as intended.

6. Punch press (1) according to one of the preceding claims, wherein the fluid pressure or pressure difference at which the overload valve (7) of the spring-damper elements (2) opens is essentially adjustable to zero or the overload valve (7) can be brought into an open state.

7. Punch press (1) according to one of the preceding claims, wherein the hydraulic damper unit (3) of the spring-damper elements (2) has a switchable bypass valve (9) arranged between the first fluid chamber (4) and the second fluid chamber (5), which enables a bypass (10) when open, via which hydraulic fluid flows from the first fluid chamber (4) into the second fluid chamber (5) bypassing the throttle point (6) when the spring-damper element (2) is moved downward under spring compression and via which hydraulic fluid flows from the second fluid chamber (5) into the first fluid chamber (4) when the spring-damper element (2) is moved upward under spring relief.

8. Punch press (1) according to one of the preceding claims, wherein the spring-damper elements (2) have a pneumatic cylinder (11) for adjusting the fluid pressure or the pressure difference at which the overload valve (7) opens, which is subjected to a specific air pressure during operation as intended.

9. Punch press (1) according to one of the preceding claims, wherein the spring-damper elements (2) for adjusting the fluid pressure or pressure difference at which the overload valve (7) opens, have a threaded spindle (12) which acts on one or more valve springs (13).

10. Method for operating a punch press (1) according to one of the claims 1 to 9, wherein the press (1) is operated in different operations as intended, in each case with different adjustment of the fluid pressure or the pressure difference, at which the overload valves (7) of the spring-damper elements (2) open.

11. Method for operating a punch press (1) according to one of claims 1 to 9, in particular according to claim 10, wherein the adjustment of the fluid pressure or pressure difference, respectively, at which the overload valves (7) of the spring-damper elements (2) open, respectively, is changed during the intended operation of the punch press (1), for changing the amplitude with which the punch press (1) oscillates in the spring-damper elements (2).

12. Method according to claim 11, wherein the setting of the fluid pressure or the pressure difference, at which the overload valves (7) of the spring-damper elements (2) open, is changed in such a way that the punch press (1) oscillates with a certain amplitude in the spring-damper elements (2), in particular with a maximum permissible amplitude.

13. Method according to claim 12, wherein the amplitude is measured, in particular by means of one or more distance measuring sensors (14), and the adjustment of the fluid pressure or the pressure difference, at which the overload valves (7) of the spring-damper elements (2) open, is automatically regulated via a machine control in such a way that the punch press (1) oscillates with a desired amplitude in the spring-damper elements (2).

14. Method according to claim 13, wherein separately for each spring-damper element (2) the amplitude is measured and the setting of the fluid pressure or pressure difference at which its overload valve (7) opens is controlled.

15. Method according to one of claims 10 to 14, wherein the adjustment of the fluid pressure or pressure difference, at which the overload valves (7) of the spring-damper elements (2) open is effected with the aid of pneumatic cylinders (11) which are acted upon by a specific air pressure.

16. Method according to one of claims 10 to 14, wherein the adjustment of the fluid pressure or pressure difference at which the overload valves (7) of the spring-damper elements (2) open is effected by means of threaded spindles (12) acting on one or more valve springs (13).

17. Use of a spring-damper element (2) for mounting a punch press (1), which has a hydraulic damper unit (3) with a first fluid chamber (4) and a second fluid chamber (5), wherein, in the intended operation, a hydraulic fluid is displaced from the first fluid chamber (4) via a throttle point (6) into the second fluid chamber (5) during downward movement under spring compression of the spring-damper element (2), and which has an overload valve (7) arranged between the first fluid chamber (4) and the second fluid chamber (5), which opens and enables a bypass (8) when a certain fluid pressure in the first fluid chamber (4) is reached or when a certain pressure difference between the first fluid chamber (4) and the second fluid chamber (5) is reached, via which hydraulic fluid then flows from the first fluid chamber (4) into the second fluid chamber (5), bypassing the throttle point (6), wherein the spring-damper element (2) is adapted in such a way that the fluid pressure or pressure difference at which the overload valve (7) opens is adjustable when the spring-damper element (2) is installed as specified.

18. Use of a spring-damper element (2) according to claim 17, wherein the hydraulic damper unit (3) of the spring-damper element (2) is adapted in such a way that during intended operation, when the spring-damper element (2) moved upward under spring relief, hydraulic fluid flows from the second fluid chamber (5) back into the first fluid chamber (4) via a flow cross-section which is wider than the cross-section of the throttle point (6).

19. Use of a spring-damper element (2) according to one of claims 17 to 18, wherein the spring-damper element (2) is adapted in such a way that the fluid pressure or the pressure difference at which the overload valve (7) opens can be adjusted continuously or in steps, in particular without tools.

20. Use of a spring-damper element (2) according to one of claims 17 to 19, wherein the spring-damper element (2) is adapted in such a way that the fluid pressure or the pressure difference at which the overload valve (7) opens is manually adjustable and/or is adjustable automatically via a control system.

21. Use of a spring-damper element (2) according to one of claims 17 to 20, wherein the spring-damper element (2) is adapted in such a way that the fluid pressure or the pressure difference at which the overload valve (7) opens is adjustable during the intended operation.

22. Use of a spring-damper element (2) according to one of claims 17 to 21, wherein the spring-damper element (2) is adapted in such a way that the fluid pressure or pressure difference at which the overload valve (7) opens can be adjusted substantially to zero or the overload valve (7) can be brought into an open state.

23. Use of a spring-damper element (2) according to one of claims 17 to 22, wherein the hydraulic damper unit (3) of the spring-damper element (2) has a switchable bypass valve (9) arranged between the first fluid chamber (4) and the second fluid chamber (5), which releases a bypass (10) in the open state, via which hydraulic fluid flows from the first fluid chamber (4) into the second fluid chamber (5) bypassing the throttle point (6) when the spring-damper element (2) is moved downward under spring compression and via which hydraulic fluid flows from the second fluid chamber (5) into the first fluid chamber (4) when the spring/damper element (2) moved upward under spring relief.

24. Use of a spring-damper element (2) according to one of claims 17 to 23, wherein the spring-damper element (2) has a pneumatic cylinder (11) for adjusting the fluid pressure or the pressure difference at which the overload valve (7) opens, which cylinder (11) is acted upon with a specific air pressure in the intended operation.

25. Use of a spring-damper element (2) according to one of claims 17 to 23, wherein the spring-damper element (2) has a threaded spindle (12) which acts on one or more valve springs (13) for adjusting the fluid pressure or pressure difference at which the overload valve (7) opens.

## Revendications

1. Presse à poinçonner (1) montée sur des éléments ressort-amortisseur (2), dans laquelle les éléments ressort-amortisseur (2) présentent chacun une unité d'amortissement hydraulique (3) avec une première chambre à fluide (4) et une deuxième chambre à fluide (5), dans laquelle, dans le fonctionnement prévu, lorsque l'élément ressort-amortisseur (2) est déplacé vers le bas sous compression de ressort, un fluide hydraulique est déplacé de la première chambre à fluide (4) via un point d'étranglement (6) dans la deuxième chambre à fluide (5), et comportent chacun une soupape de surcharge (7) disposée entre la première chambre à fluide (4) et la deuxième chambre à fluide (5), qui s'ouvre lorsqu'une certaine pression de fluide est atteinte dans la première chambre de fluide (4) ou lorsqu'une certaine différence de pression est atteinte entre la première chambre de fluide (4) et la deuxième chambre de fluide (5), et active une dérivation (8) par laquelle le fluide hydraulique s'écoule ensuite de la première chambre de fluide (4) dans la deuxième chambre de fluide (5), en contournant le point d'étranglement (6), **caractérisé en ce que** les éléments ressort-amortisseur (2) sont chacun adaptés de telle sorte que la pression du fluide ou la différence de pression à laquelle la soupape de surcharge (7) s'ouvre peut être réglée lorsque l'élément ressort-amortisseur (2) est installé comme prévu.

2. Presse à poinçonner (1) selon la revendication 1, dans laquelle l'unité d'amortissement hydraulique (3) des éléments ressort-amortisseur (2) est adaptée de telle sorte que, lors d'un fonctionnement comme prévu, lorsque l'élément ressort-amortisseur (2) déplacé vers le haut sous soulagement de ressort, le fluide hydraulique s'écoule de la deuxième chambre à fluide (5) dans la première chambre à fluide (4) par une section d'écoulement qui est plus large que la section du point d'étranglement (6).

3. Presse à poinçonner (1) selon l'une des revendications précédentes, dans laquelle la pression ou la différence de pression du fluide à laquelle la soupape de surcharge (7) des éléments ressort-amortisseur (2) s'ouvre est réglée en continu ou par paliers, en particulier sans outil.

4. Presse à poinçonner (1) selon l'une des revendications précédentes, la pression de fluide ou la différence de pression à laquelle la soupape de surcharge (7) des éléments ressort-amortisseur (2) s'ouvre étant réglable manuellement et/ou automatiquement par une commande.

5. Presse à poinçonner (1) selon l'une des revendications précédentes, la pression du fluide ou la différence de pression à laquelle la soupape de surcharge (7) des éléments ressort-amortisseur (2) s'ouvre étant réglable pendant le fonctionnement comme prévu.

6. Presse à poinçonner (1) selon l'une des revendications précédentes, la pression du fluide ou la différence de pression à laquelle la soupape de surcharge (7) des éléments ressort-amortisseur (2) s'ouvre est essentiellement réglable à zéro ou la soupape de surcharge (7) peut être amenée dans un état ouvert.

7. Presse à poinçonner (1) selon l'une des revendications précédentes, dans laquelle l'unité d'amortissement hydraulique (3) des éléments ressort-amortisseur (2) présente une soupape de dérivation commutable (9) disposée entre la première chambre de fluide (4) et la deuxième chambre de fluide (5), qui active une dérivation (10) lorsqu'elle est ouverte, par laquelle le fluide hydraulique s'écoule de la première chambre à fluide (4) dans la deuxième chambre à fluide (5) en contournant le point d'étranglement (6) lorsque l'élément ressort-amortisseur (2) est déplacé vers le bas sous compression de ressort et par laquelle le fluide hydraulique s'écoule de la deuxième chambre à fluide (5) dans la première chambre à fluide (4) lorsque l'élément ressort-amortisseur (2) est déplacé vers le haut sous soulagement de ressort.

8. Presse à poinçonner (1) selon l'une des revendications précédentes, dans laquelle les éléments ressort-amortisseur (2) présentent un cylindre pneumatique (11) pour le réglage de la pression du fluide ou de la différence de pression à laquelle la soupape de surcharge (7) s'ouvre, qui est soumis à une pression d'air déterminée pendant le fonctionnement prévu.

9. Presse à poinçonner (1) selon l'une des revendications précédentes, dans laquelle les éléments ressort-amortisseur (2) pour le réglage de la pression du fluide ou de la différence de pression à laquelle la soupape de surcharge (7) s'ouvre présentent une tige filetée (12) qui agit sur un ou plusieurs ressorts de soupape (13).

10. Procédé pour faire fonctionner une presse à poinçonner (1) selon l'une des revendications 1 à 9, la presse (1) étant actionnée en différentes opérations comme prévu, avec à chaque fois un réglage différent de la pression du fluide ou de la différence de pression à laquelle les soupapes de surcharge (7) des éléments ressort-amortisseur (2) s'ouvrent.

11. Procédé pour faire fonctionner une presse à poinçonner (1) selon l'une des revendications 1 à 9, en particulier selon la revendication 10, dans lequel le réglage de la pression du fluide ou de la différence de pression à laquelle les soupapes de surcharge (7) des éléments ressort-amortisseur (2) s'ouvrent est modifié pendant le fonctionnement prévu de la presse à poinçonner (1), pour modifier l'amplitude avec laquelle la presse à poinçonner (1) oscille dans les éléments ressort-amortisseur (2).

12. Procédé selon la revendication 11, dans lequel le réglage de la pression de fluide ou de la différence de pression à laquelle les soupapes de surcharge (7) des éléments ressort-amortisseur (2) s'ouvrent est modifié de telle sorte que la presse à poinçonner (1) oscille avec une certaine amplitude dans les éléments ressort-amortisseur (2), en particulier avec une amplitude maximale admissible.

13. Procédé selon la revendication 12, dans lequel l'amplitude est mesurée, en particulier au moyen d'un ou plusieurs capteurs de mesure de distance (14), et le réglage de la pression du fluide ou de la différence de pression à laquelle les soupapes de surcharge (7) des éléments ressort-amortisseur (2) s'ouvrent est automatiquement régulé par une commande de machine de telle sorte que la presse à poinçonner (1) oscille avec une amplitude souhaitée dans les éléments ressort-amortisseur (2).

14. Procédé selon la revendication 13, dans lequel, séparément pour chaque élément ressort-amortisseur (2), l'amplitude est mesurée et le réglage de la pression du fluide ou de la différence de pression à laquelle sa soupape de surcharge (7) s'ouvre est commandé.

15. Procédé selon l'une des revendications 10 à 14, dans lequel le réglage de la pression de fluide ou de la différence de pression à laquelle les soupapes de surcharge (7) des éléments ressort-amortisseur (2) s'ouvrent est effectué à l'aide de cylindres pneumatiques (11) qui sont soumis à une pression d'air déterminée.

16. Procédé selon l'une des revendications 10 à 14, dans lequel le réglage de la pression de fluide où de la différence de pression à laquelle les soupapes de surcharge (7) des éléments ressort amortisseur (2) s'ouvrent est effectué au moyen de tiges filetées (12) agissant sur un ou plusieurs ressorts de soupape (13).

17. Utilisation d'un élément ressort-amortisseur (2) pour le montage d'une presse à poinçonner (1), qui présente une unité d'amortissement hydraulique (3) avec une première chambre à fluide (4) et une deuxième chambre à fluide (5), un fluide hydraulique étant déplacé de la première chambre à fluide (4) dans la deuxième chambre à fluide (5) lors de la compression de ressort vers le bas de l'élément ressort-amortisseur (2), par l'intermédiaire d'un point d'étranglement (6), et qui présente une soupape de surcharge (7) disposée entre la première chambre à fluide (4) et la deuxième chambre à fluide (5), qui s'ouvre et active une dérivation (8) lorsqu'une certaine pression de fluide dans la première chambre de fluide (4) est atteinte ou lorsqu'une certaine différence de pression entre la première chambre de fluide (4) et la deuxième chambre de fluide (5) est atteinte, par laquelle le fluide hydraulique s'écoule ensuite de la première chambre de fluide (4) dans la deuxième chambre de fluide (5), en contournant le point d'étranglement (6), l'élément ressort-amortisseur (2) étant adapté de telle sorte que la pression du fluide ou la différence de pression à laquelle la soupape de surcharge (7) s'ouvre est réglable lorsque l'élément ressort-amortisseur (2) est installé comme indiqué.

18. Utilisation d'un élément ressort-amortisseur (2) selon la revendication 17, l'unité d'amortissement hydraulique (3) de l'élément ressort-amortisseur (2) étant adaptée de telle sorte que, pendant le fonctionnement prévu, lorsque l'élément ressort-amortisseur (2) déplacé vers le haut sous soulagement de ressort, le fluide hydraulique s'écoule de la deuxième chambre de fluide (5) dans la première chambre de fluide (4) par une section d'écoulement qui est plus large que la section du point d'étranglement (6).

19. Utilisation d'un élément ressort-amortisseur (2) selon l'une des revendications 17 à 18, l'élément ressort-amortisseur (2) étant adapté de telle sorte que la pression du fluide ou la différence de pression à laquelle la soupape de surcharge (7) s'ouvre peut être réglée en continu ou par paliers, en particulier sans outil.

20. Utilisation d'un élément ressort-amortisseur (2) selon l'une des revendications 17 à 19, l'élément ressort-amortisseur (2) étant adapté de telle sorte que la pression du fluide ou la différence de pression à laquelle la soupape de surcharge (7) s'ouvre est réglable manuellement et/ou est réglable automatiquement par un système de commande.

21. Utilisation d'un élément ressort-amortisseur (2) selon l'une des revendications 17 à 20, l'élément ressort-amortisseur (2) étant adapté de telle sorte que la pression du fluide ou la différence de pression à laquelle la soupape de surcharge (7) s'ouvre est réglable pendant l'opération prévue.

22. Utilisation d'un élément ressort-amortisseur (2) selon l'une des revendications 17 à 21, l'élément ressort-amortisseur (2) étant adapté de telle sorte que la pression de fluide ou la différence de pression à laquelle la soupape de surcharge (7) s'ouvre peut être réglée sensiblement à zéro ou que la soupape de surcharge (7) peut être amenée dans un état ouvert.

23. Utilisation d'un élément ressort-amortisseur (2) selon l'une des revendications 17 à 22, l'unité d'amortissement hydraulique (3) de l'élément ressort-amortisseur (2) présentant une soupape de dérivation commutable (9) disposée entre la première chambre de fluide (4) et la deuxième chambre de fluide (5), qui active une dérivation (10) à l'état ouvert, par lequel du fluide hydraulique s'écoule de la première chambre à fluide (4) dans la deuxième chambre à fluide (5) en contournant le point d'étranglement (6) lorsque l'élément ressort-amortisseur (2) est déplacé vers le bas sous compression de ressort et par lequel du fluide hydraulique s'écoule de la deuxième chambre à fluide (5) dans la première chambre à fluide (4) lorsque l'élément ressort-amortisseur (2) déplacé vers le haut sous soulagement de ressort.

24. Utilisation d'un élément ressort-amortisseur (2) selon l'une des revendications 17 à 23, l'élément ressort-amortisseur (2) présentant un cylindre pneumatique (11) pour le réglage de la pression du fluide ou de la différence de pression à laquelle la soupape de surcharge (7) s'ouvre, lequel cylindre (11) est soumis à une pression d'air déterminée dans le fonctionnement prévu.

25. Utilisation d'un élément ressort-amortisseur (2) selon l'une des revendications 17 à 23, l'élément ressort-amortisseur (2) présentant une tige filetée (12) qui agit sur un ou plusieurs ressorts de soupape (13) pour régler la pression de fluide ou la différence de pression à laquelle la soupape de surcharge (7) s'ouvre.
